# EUROPÄISCHE PATENTSCHRIFT

(11) **EP 3 039 188 B1**
(45) Veröffentlichungstag und Bekanntmachung des Hinweises auf die Patenterteilung: **29.08.2018**
(21) Anmeldenummer: 14747295.5
(22) Anmeldetag: 12.07.2014
(51) Int. Cl.: E01B 5/02, B23K 37/04, B25H 1/02

(54) **SCHIENE, VERBINDUNGSRAHMEN UND ROLLFUSS EINES SCHIENENSYSTEMS FÜR SCHWEISSTISCHE**
RAIL, CONNECTING FRAME, AND CASTER OF A RAIL SYSTEM FOR WELDING TABLES
RAIL, CADRE DE RACCORDEMENT ET PIED À ROULETTES D'UN SYSTÈME À RAIL POUR TABLES DE SOUDAGE

(30) Priorität: 28.08.2013 DE 202013007619 U
(43) Veröffentlichungstag der Anmeldung: 06.07.2016
(73) Patentinhaber: Siegmund, Bernd, 86845 Grossaitingen (DE)
(72) Erfinder: Siegmund, Bernd, 86845 Grossaitingen (DE)
(74) Vertreter: Seifert, Thomas
(86) Internationale Anmeldenummer: PCT/EP2014/001918
(87) Internationale Veröffentlichungsnummer: WO 2015/028109

(56) Entgegenhaltungen:
- EP-A1- 0 371 318
- CN-U- 202 193 546
- DE-A1- 4 404 109
- DE-A1- 19 846 161
- DE-U1- 9 015 218
- JP-A- H03 254 388
- US-A- 4 655 466
- US-A- 4 775 247
- US-A- 5 653 172
- US-A- 5 839 721
- US-A1- 2009 268 993
- US-B1- 6 435 421

## Beschreibung

Die Erfindung bezieht sich auf eine Schiene für ein Schienensystem für Schweißtische nach dem Oberbegriff des Anspruchs 1 und auf einen Rollfuß für ein Schienensystem für Schweißtische nach dem Oberbegriff des Anspruchs 2, sowie auf ein Schienensystem für Schweißtische (siehe Anspruch 6). Aus der DE 44 04 109 A1 ist eine Schiene der eingangs genannten Art bekannt.

Aus der US 5 839 721 A ist ein Rollfuß der eingangs genannten Art bekannt.

Im Stand der Technik sind im Zusammenhang mit Schweißtischen Auflage- und Fundamentschienen bekannt, die zur Befestigung auf oder in einem Boden ausgebildet sind und mehrere den Öffnungen der Schweißtische entsprechende Öffnungen aufweisen. Diese eignen sich für den Aufbau eines großflächigen Rasters zur Bearbeitung von großen Bauteilen. Die Auflage- und Fundamentschienen werden fest am Boden verschraubt oder nach Möglichkeit im Hallenboden versenkt. So entsteht ein strukturierter Arbeitsraum mit vielen Spannmöglichkeiten und ermöglicht damit ein sicheres, maßgenaues und effizientes Arbeiten. Auf den Auflage- und Fundamentschienen können Verbindungsrahmen beliebig positioniert werden, die mit Tischplatten von Schweißtischen kombiniert werden können.

Daneben sind im Zusammenhang mit Schweißtischen Rundschienen bekannt, die in den Betonboden eingelassen werden. Auf den fest installierten Rundschienen können Verbindungsrahmen mit Präzisionsrollen schnell und stufenlos positioniert werden.

Außerdem sind Verschiebefüße im Zusammenhang mit Schweißtischen bekannt, die einen Grundkörper, Rollen und eine Kippschutzeinrichtung umfassen und auf Auflage- und Fundamentschienen verschiebbar sind. Die Rollen sind dabei federgelagert, so dass der Verschiebefuß nur im unbelasteten Zustand verschiebbar ist. Die Kippschutzeinrichtung ist von einem den eigentlichen Verschiebefuß in Verschieberichtung weit überragenden trapezförmigen Blechstück gebildet, was in der Praxis eine Stolperkante darstellt.

Beispielsweise finden derartige Schienen, Verbindungsrahmen, Rollfüße sowie Schienensysteme in Verbindung mit Schweißtischen Verwendung, mit denen sich Gegenstände aufspannen und verschweißen oder auf andere Weise bearbeiten lassen. Daneben gibt es jedoch auch eine Vielzahl anderer Einsatzmöglichkeiten für Schweißtische, beispielsweise zum Vermessen von Vorrichtungen oder dergleichen. Derartige Schweißtische sind etwa aus der EP 0 541 904 A1 oder der DE 91 09 540 U1 bekannt. Auf den Inhalt dieser Druckschriften wird Bezug genommen und dieser ausdrücklich auch zum Gegenstand der vorliegenden Anmeldung gemacht.

Schweißtische besitzen in ihrer Oberfläche und gegebenenfalls auch in seitlichen Wangen der Tischplatte eine Vielzahl von meist runden Öffnungen, die in einem gleichmäßigen Rastermaß angeordnet sind. Die Tischplatten können dabei mit den entsprechenden Tischbeinen lösbar verbunden sein, so dass die Tischplatten auch mit Verbindungsrähmen oder Rollfüßen verbunden werden können. Hierzu besitzen die Tischplatten auch im unteren Bereich entsprechende Öffnungen. Daneben besitzen die Schweißtische ein vielfältiges Zubehör, mit dem das Aufspannen von Gegenständen ermöglicht wird. So sind im wesentlichen winkelförmige Stützen vorgesehen, die ebenfalls runde Öffnungen oder aber auch langlochförmige Öffnungen aufweisen. Diese Stützen können untereinander oder mit dem Tisch durch Spannmittel, etwa Spannbolzen verbunden werden, die aus einer Gewindeschraube mit zugehöriger Mutter bestehen können. Daneben finden auch Spannbolzen Verwendung, die von einer Seite aus in die Öffnungen des Tisches eingeführt werden und sich innerhalb der Öffnung oder an der Unterseite der Tischplatte abstützen. Neben den bereits genannten Druckschriften sind solche Spannbolzen auch aus der DE 199 17 209 A1, DE 202 19 317 U1, bekannt, auf deren Inhalt Bezug genommen und zum Gegenstand der vorliegenden Anmeldung gemacht wird.

Daneben werden im Zusammenhang mit Schweißtischen als Spannmittel Schraubzwingen verwendet, die ebenfalls zum Verspannen von Gegenständen dienen. Solche Schraubzwingen finden sich neben den bereits genannten Druckschriften auch in der US 4 867 427, DE 100 11 490 A1, DE 200 23 552 U1, DE 202 04 107 U1, DE 202 12 731 U1, DE 202 19 317 U1, DE 10 2009 022 013 A1 oder in Form von Schnellspannzwingen in der DE 90 15 218 U1. Auch auf den Inhalt dieser Druckschriften wird Bezug genommen und zum Gegenstand der vorliegenden Anmeldung gemacht. Als weiteres Zubehör sind noch verschiedene U-Winkel, Anschläge mit runden und/oder langlochförmigen Öffnungen und Prismen bekannt.

Der Erfindung liegt das Problem zugrunde, den Stand der Technik vorteilhaft weiter zu bilden.

Gelöst wird diese Aufgabe mit den Merkmalen der unabhängigen Ansprüche. Vorteilhafte Ausgestaltungen der Erfindung ergeben sich aus den abhängigen Ansprüchen.

Bei der erfindungsgemäßen Schiene eines Schienensystems für Schweißtische umfassend eine Grundschiene, die zur Befestigung auf oder in einem Boden ausgebildet ist und mehrere den Öffnungen der Schweißtische entsprechende Öffnungen aufweist, ist in einer Ausnehmung der Grundschiene eine Rundschiene befestigt. Die Schiene stellt damit eine Kombination einer Auflage- und Fundamentschiene mit einer Rundschiene dar, was zum einen die Montage eines Schienensystems aus wenigstens einer Schiene vereinfacht und zum anderen die Einsatzmöglichkeiten der Schiene erhöht. Die Schiene lässt sich in einem Schritt verlegen, was zu einer Zeiteinsparung und gleichzeitig einer höheren Genauigkeit bei der Ausnivellierung der Schienen in der Höhe und Parallelität führt. Die Schiene wird mit Hilfe von Gewindestiften ausgerichtet und anschließend mit Bodenverankerungen und Schrauben fest mit dem Boden verschraubt. Als Unterlage für die Gewindestifte werden Unterlegbleche verwendet. Die Schiene lässt sich dabei über Flur oder unter Flur montieren, wobei bei der Montage über Flur üblicherweise Unterlegeplatten unter der Schiene zum Einsatz kommen.

Außerdem ist vorgesehen, dass die Schiene eine Kippschutzausnehmung aufweist, die eine Kippschutzkante umfasst und für das Zusammenwirken mit einer Kippschutzeinrichtung eines Rollfußes ausgebildet ist.

Erfindungsgemäß ist die Kippschutzausnehmung in der Oberseite der Schiene angeordnet und die Kippschutzkante von einer an der Schiene lösbar befestigten und die Kippschutzausnehmung teilweise überdeckenden Kippschutzsicherungsleiste gebildet. Diese Variante der Schiene eignet sich besonders für die Befestigung in einem Boden, kann aber auch auf einem Boden befestigt werden.

Bei dem erfindungsgemäßen Rollfuß für ein Schienensystem für Schweißtische, der einen Grundkörper, Rollen und eine Kippschutzeinrichtung umfasst, sind die Rollen für das Zusammenwirken mit einer Rundschiene ausgebildet und die Kippschutzeinrichtung für das Zusammenwirken mit einer Kippschutzausnehmung und Kippschutzkante einer Schiene ausgebildet. Der Rollfuß ist damit auf der Rundschiene einer erfindungsgemäßen Schiene mit Kippschutzausnehmung und Kippschutzkante sowohl im unbelasteten als auch im belasteten Zustand rollbar. Die Kippschutzeinrichtung kann dabei seitlich am Grundkörper angebracht werden, so dass keine gefährliche Stolperkante besteht.

Erfindungsgemäß umfasst die Kippschutzeinrichtung eine Kippschutzleiste, an der ein Kippschutzhaken oder Kippschutzrollen angeordnet sind und die an dem Grundkörper lösbar befestigt ist. Besonders vorteilhaft ist es dabei, wenn die Kippschutzleiste an dem Grundkörper in zwei verschiedenen Positionen befestigbar ist. Somit lässt sich der Rollfuß mit verschiedenen Varianten einer Schiene mit Kippschutz verwenden, indem die Kippschutzleiste in der jeweils der Variante der Schiene entsprechenden Position an dem Grundkörper befestigt wird. Bei einer Variante einer Schiene mit Kippschutz, bei der eine Kippschutzausnehmung in einer Längsseite der Schiene angeordnet ist und eine Kippschutzkante von einem Überstand der Oberseite der Schiene gebildet ist, wird die Kippschutzleiste nach dem Aufsetzen des Rollfußes auf die Schiene an dem Grundkörper befestigt. Bei erfindungsgemäßen Variante der Schiene mit Kippschutz wird die Kippschutzsicherungsleiste zunächst von der Schiene entfernt, der Rollfuß ohne Kippschutzleiste auf die Schiene aufgesetzt und die Kippschutzleiste dann an dem Grundkcrper befestigt, bevor die Kippschutzsicherungsleiste schließlich wieder an der Schiene befestigt wird.

Nach einer Ausgestaltung des Rollfußes ist vorgesehen, dass in der Fußplatte des Grundkörpers eine den Öffnungen der Schiene oder Schweißtische entsprechende Öffnung vorgesehen ist, wodurch der Rollfuß auf der Schiene mittels eines Spannbolzens rasterweise fixierbar ist.

Vorteilhafterweise können an zwei gegenüberliegenden Seiten der Fußplatte Abstreifbürsten vorgesehen sein, um die Rollen vor Staub oder dergleichen auf den Rundschienen zu schützen.

Aus den erfindungsgemäßen Schienen und Rollfüßen ergeben sich Schienensysteme, die wenigstens eine Schiene sowie wenigstens einen Rollfuß umfassen, wobei letzteres auch zusätzlich wenigstens einen Verbindungsrahmen umfassen kann, wobei der Verbindungsrahmen mit Rollen versehen ist, die für das Zusammenwirken mit einer Rundschiene ausgebildet sind, indem in Fußplatten des Verbindungsrahmens jeweils eine Ausnehmung vorgesehen ist, in der eine Drehkranzrolle in verschiedenen Drehpositionen befestigbar ist.

Anhand der Zeichnung wird die Erfindung näher erläutert. Es zeigen:
Fig. 1 eine Schiene mit Kippschutz,
Fig. 2 eine Kippschutzsicherungsleiste,
Fig. 3 eine vergrößert dargestellte Ansicht des Schnittes IX-IX der Fig. 1,
Fig. 4 eine vergrößert dargestellte Ansicht des Schnittes X-X der Fig. 1,
Fig. 5 eine Explosionsansicht eines Rollfußes,
Fig. 6 bis 10 verschiedene Ansichten des Grundkörpers des Rollfußes,
Fig. 11 und 12 verschiedene Ansichten einer Kippschutzleiste mit Kippschutzhaken des Rollfußes,
Fig. 13 und 14 verschiedene Ansichten einer Kippschutzleiste mit Kippschutzrollen des Rollfußes,
Fig. 15 und 16 einen Rollfuß mit Kippschutzhaken bzw. Kippschutzrollen in Verbindung mit einer Variante einer Schiene mit Kippschutz,
Fig. 17 und 18 einen Rollfuß mit Kippschutzhaken bzw. Kippschutzrollen in Verbindung mit der Schiene mit Kippschutz der Fig. 1 bis 4,
Fig. 19 und 20 verschiedene Ansichten von einem Verbindungsrahmen mit Tischplatte und Rollfüßen mit U-Winkel auf der Schienen mit Kippschutz der Fig. 1 bis 4.

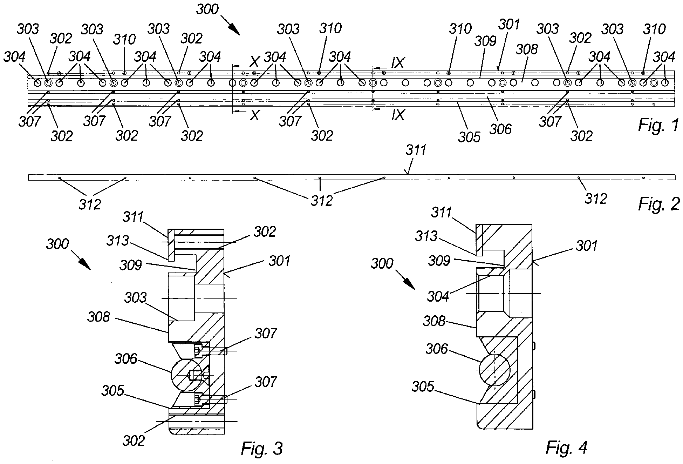

In den Fig. 1 bis 4 ist eine Schiene 300 mit Kippschutz dargestellt, die eine Grundschiene 301 umfasst. Die Grundschiene 301 ist zur Befestigung auf oder in einem Boden ausgebildet, indem sie Gewindelöcher 302 zur Arretierung der Schiene 300 mit Gewindestiften und Senklöcher 303 zur Verankerung der Schiene 300 mit Schrauben in Bodendübeln aufweist. Dabei kommen bei der Montage über Flur üblicherweise Unterlegeplatten unter der Schiene 300 zum Einsatz. Darüber hinaus weist die Grundschiene 301 mehrere Öffnungen 304 auf, die den Öffnungen von Schweißtischen entsprechen, mit denen die Schiene 300 Verwendung findet.

In einer Ausnehmung 305 der Grundschiene 301 ist eine Rundschiene 306 befestigt, beispielsweise mit Schrauben 307 verschraubt.

In der Oberseite 308 der Schiene 300 ist eine Kippschutzausnehmung 309 angeordnet. In Gewindebohrungen 310 kann eine Kippschutzsicherungsleiste 311 mit Senklöchern 312 an der Schiene 300 lösbar befestigt werden. Wie insbesondere aus den Fig. 3 und 4 hervorgeht, überdeckt die befestigte Kippschutzsicherungsleiste 311 die Kippschutzausnehmung 309 teilweise und bildet so eine Kippschutzkante 313. Die Kippschutzkante 313 ist für das Zusammenwirken mit einer Kippschutzeinrichtung eines Rollfußes ausgebildet, wie dies weiter unten erläutert wird.

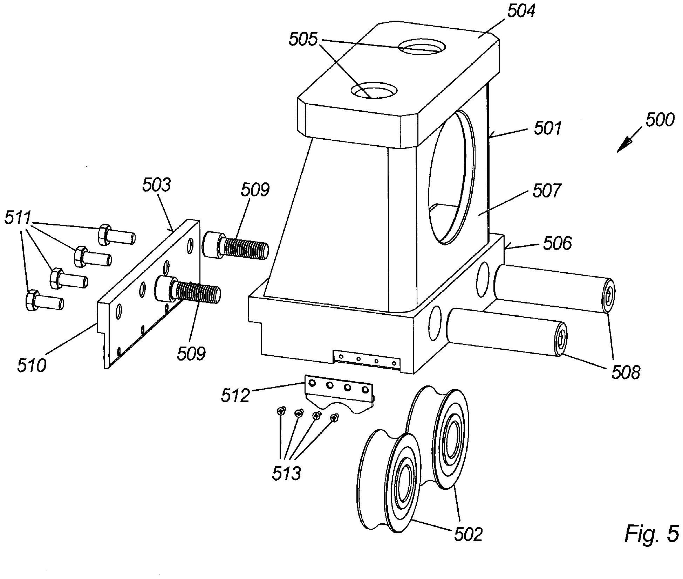

In der Fig. 5 ist eine Explosionsansicht eines Rollfußes 500 dargestellt, der einen Grundkörper 501, Rollen 502 und eine Kippschutzeinrichtung 503 umfasst. Die Rollen 502 sind für das Zusammenwirken mit einer Rundschiene 206, 306 ausgebildet und die Kippschutzeinrichtung 503 für das Zusammenwirken mit einer Kippschutzausnehmung 209, 309 und Kippschutzkante 210, 313 einer Schiene 200, 300. Der Rollfuß ist damit auf der Rundschiene 206, 306 einer Schiene 200, 300 rollbar.

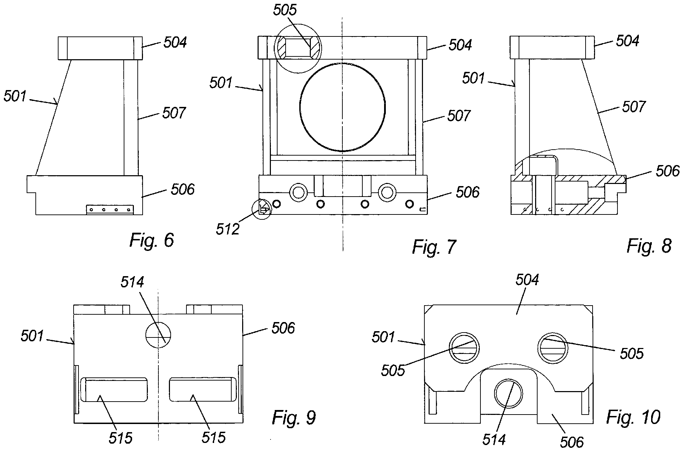

Wie sich besonders deutlich aus den Ansichten der Fig. 6 bis 10 ergibt, besitzt der Grundkörper 501 eine Kopfplatte 504, die Öffnungen 505 aufweist, die den Öffnungen von Schweißtischen entsprechen, mit denen der Rollfuß 500 Verwendung findet. Damit ist es möglich, Tischplatten oder U-Winkel der Schweißtische mit dem Rollfuß 500 zu verbinden.

Der Grundkörper 501 besitzt außerdem eine Fußplatte 506, wobei sich zwischen Kopfplatte 504 und Fußplatte 506 U-förmige Wände 507 befinden.

In der Fußplatte 506 sind Achsen 508 mit Zylinderschrauben 509 für die Rollen 502 gelagert. Die Kippschutzeinrichtung 503 umfasst eine Kippschutzleiste 510, deren Varianten weiter unten näher erläutert werden und die mit Sechskantschrauben 511 an dem Grundkörper lösbar befestigt ist, wobei die Kippschutzleiste 510 in zwei Positionen befestigbar ist. Es versteht sich, dass die Kippschutzeinrichtung alternativ auch fest mit dem Grundkörper 501 verbunden sein könnte. Abstreifbürsten 512 können mit Senkschrauben 513 an zwei gegenüberliegenden Seiten der Fußplatte 506 befestigt werden.

In der Fußplatte 506 ist eine Öffnung 514 vorgesehen, die den Öffnungen 304 von Schienen 300 oder von Schweißtischen entspricht, mit denen der Rollfuß 500 Verwendung findet. Damit ist der Rollfuß 500 auf der Schiene 300 mittels einer Bremsstange oder eines Spannbolzens der Schweißtische rasterweise fixierbar, wie dies weiter unten näher erläutert ist. Selbstverständlich sind auch Ausnehmungen 515 für die Rollen 502 in der Fußplatte 506 vorhanden.

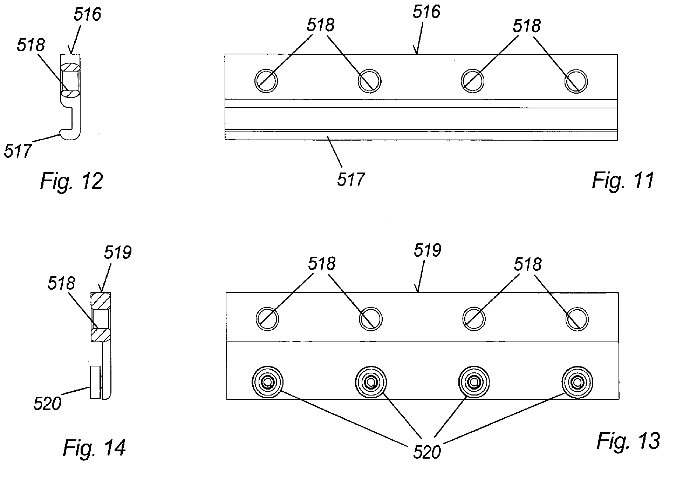

Die in den Fig. 11 und 12 dargestellte erste Variante einer Kippschutzleiste 516 umfasst einen Kippschutzhaken 517, der für das Zusammenwirken mit der Kippschutzausnehmung 209, 309 und Kippschutzkante 210, 313 der Schiene 200, 300 ausgebildet ist. Bohrungen 518 dienen zur Befestigung der Kippschutzleiste 516 an dem Grundkörper 501 mittels der Sechskantschrauben 511. Dabei kann die Kippschutzleiste 516 sowohl in der in Fig. 12 gezeigten Position als auch spiegelverkehrt dazu an dem Grundkörper 501 befestigt werden, so dass der Rollfuß 500 sowohl mit der Schiene 300 als auch mit einer Schiene 200, bei der eine Kippschutzausnehmung 209 in einer Längsseite der Schiene 200 angeordnet ist und eine Kippschutzkante 210 von einem Überstand der Oberseite der Schiene 200 gebildet ist, verwendet werden kann.

Die in den Fig. 13 und 14 dargestellte zweite Variante einer Kippschutzleiste 519 umfasst Kippschutzrollen 520, die für das Zusammenwirken mit der Kippschutzausnehmung 209, 309 und Kippschutzkante 210, 313 der Schiene 200, 300 ausgebildet sind. Bohrungen 518 dienen zur Befestigung der Kippschutzleiste 519 an dem Grundkörper 501 mittels der Sechskantschrauben 511. Dabei kann die Kippschutzleiste 519 sowohl in der in Fig. 14 gezeigten Position als auch spiegelverkehrt dazu an dem Grundkörper 501 befestigt werden, so dass der Rollfuß 500 sowohl mit der Schiene 300 als auch mit der Schiene 200 verwendet werden kann.

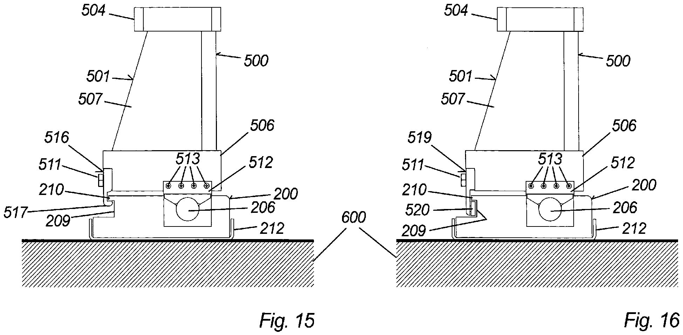

Die verschiedenen Kombinationsmöglichkeiten von Schienen 200, 300 und Kippschutzleisten 516, 519 an dem Rollfuß 500 ergeben sich besonders deutlich aus den Fig. 15 bis 18.

In den Fig. 15 und 16 ist jeweils eine Schiene 200 dargestellt, die über Flur unter Verwendung von Unterlegeplatten 212 auf einem Boden 600 befestigt ist. Auf den Schienen 200 befindet sich ein Rollfuß 500, wobei die hinter den Abstreifbürsten 512 befindlichen Rollen 502 auf den Rundschienen 206 laufen. Die Kippschutzleisten 516, 519 greifen mit ihren Kippschutzhaken 517 bzw. Kippschutzrollen 520 um die Kippschutzkante 210 herum in die Kippschutzausnehmung 209 ein, so dass ein Kippen des Rollfußes 500 auf der Schiene 200 ausgeschlossen ist.

Die Kippschutzleiste 516, 519 wird bei dieser Variante nach dem Aufsetzen des Rollfußes 500 auf die Schiene 200 an dem Grundkörper 501 befestigt.

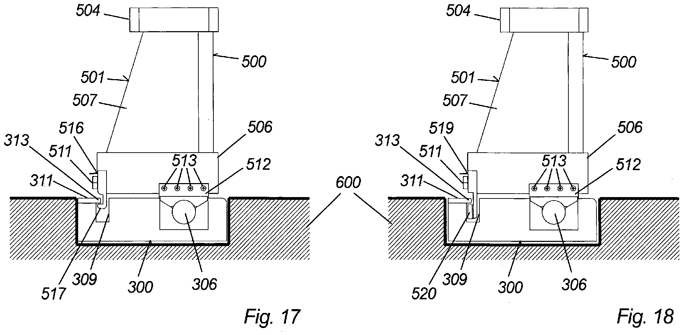

In den Fig. 17 und 18 ist jeweils eine Schiene 300 dargestellt, die unter Flur in einem Boden 600 befestigt ist. Auf den Schienen 300 befindet sich ein Rollfuß 500, wobei die hinter den Abstreifbürsten 512 befindlichen Rollen 502 auf den Rundschienen 306 laufen. Die Kippschutzleisten 516, 519 greifen mit ihren Kippschutzhaken 517 bzw. Kippschutzrollen 520 um die von der Kippschutzsicherungsleiste 311 gebildete Kippschutzkante 313 herum in die Kippschutzausnehmung 309 ein, so dass ein Kippen des Rollfußes 500 auf der Schiene 300 ausgeschlossen ist.

Die Kippschutzsicherungsleiste 311 wird bei dieser Variante zunächst von der Schiene 300 entfernt, der Rollfuß 500 ohne Kippschutzleiste 516, 519 auf die Schiene 300 aufgesetzt und die Kippschutzleiste 516, 519 dann an dem Grundkörper 501 befestigt, bevor die Kippschutzsicherungsleiste 311 schließlich wieder an der Schiene 300 befestigt wird.

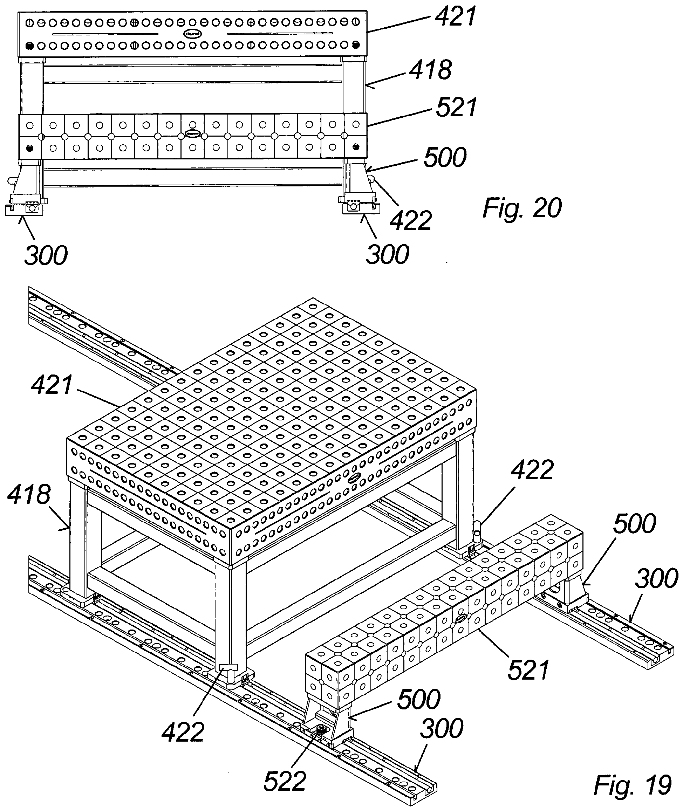

In den Fig. 19 und 20 ist ein Schienensystem umfassend einen Verbindungsrahmen 418 mit Tischplatte 421 und Rollfüße 500 mit U-Winkel 521 auf zwei parallel verlaufenden Schienen 300 dargestellt. Die Position des Verbindungsrahmens 418 auf den Schienen 300 ist mittels Bremsstangen 422 rasterweise fixierbar, indem die Bremsstangen 422 durch die Öffnungen 409 hindurch in die Öffnungen 304 eingreifen. Die Position der Rollfüße 500 auf den Schienen 300 ist mittels Spannbolzen 522 rasterweise fixierbar, indem die Spannbolzen 522 durch die Öffnungen 514 hindurch in die Öffnungen 304 eingreifen.

Bremsstangen 422 und Spannbolzen 522 können alternativ auch bei einem Rollfuß 500 oder Verbindungsrahmen 418 zur Fixierung in den Schienen 200, 300 verwendet werden.

### Bezugszeichenliste

- 200: Schiene
- 206: Rundschiene
- 209: Kippschutzausnehmung
- 210: Kippschutzkante
- 212: Unterlegeplatten

- 300: Schiene
- 301: Grundschiene
- 302: Gewindelöcher
- 303: Senklöcher
- 304: Öffnungen
- 305: Ausnehmung
- 306: Rundschiene
- 307: Schrauben
- 308: Oberseite
- 309: Kippschutzausnehmung
- 310: Gewindebohrungen
- 311: Kippschutzsicherungsleiste
- 312: Senklöcher
- 313: Kippschutzkante

- 418: Verbindungsrahmen
- 421: Tischplatten
- 422: Bremsstangen

- 500: Rollfuß
- 501: Grundkörper
- 502: Rollen
- 503: Kippschutzeinrichtung
- 504: Kopfplatte
- 505: Öffnungen
- 506: Fußplatte
- 507: U-förmige Wände
- 508: Achsen
- 509: Zylinderschrauben
- 510: Kippschutzleiste
- 511: Sechskantschrauben
- 512: Abstreifbürsten
- 513: Senkrschrauben
- 514: Öffnung
- 515: Ausnehmungen
- 516: Kippschutzleiste mit Haken
- 517: Kippschutzhaken
- 518: Bohrungen
- 519: Kippschutzleiste mit Rollen
- 520: Kippschutzrollen
- 521: U-Winkel
- 522: Spannbolzen

- 600: Boden

## Patentansprüche

1. Schiene (300) für ein Schienensystem für Schweißtische umfassend eine Grundschiene (301), die zur Befestigung auf oder in einem Boden (600) ausgebildet ist und mehrere den Öffnungen der Schweißtische entsprechende Öffnungen (304) aufweist, wobei in einer Ausnehmung (305) der Grundschiene (301) eine Rundschiene (306) befestigt ist, **dadurch gekennzeichnet, dass** die Schiene (300) eine Kippschutzausnehmung (309) aufweist, die eine Kippschutzkante (313) umfasst und für das Zusammenwirken mit einer Kippschutzeinrichtung (503) eines Rollfußes (500) ausgebildet ist, wobei die Kippschutzausnehmung (309) in der Oberseite (308) der Schiene (300) angeordnet ist und die Kippschutzkante (313) von einer an der Schiene (300) lösbar befestigten und die Kippschutzausnehmung (309) teilweise überdeckenden Kippschutzsicherungsleiste (311) gebildet ist.

2. Rollfuß (500) für ein Schienensystem für Schweißtische, der einen Grundkörper (501), Rollen (502) und eine Kippschutzeinrichtung (503) umfasst, wobei die Rollen (502) für das Zusammenwirken mit einer Rundschiene (206, 306) ausgebildet sind und die Kippschutzeinrichtung (503) für das Zusammenwirken mit einer Kippschutzausnehmung (209, 309) und Kippschutzkante (210, 313) einer Schiene (200, 300) ausgebildet sind, **dadurch gekennzeichnet, dass** die Kippschutzeinrichtung (503) eine Kippschutzleiste (510, 516, 517) umfasst, an der ein Kippschutzhaken (517) oder Kippschutzrollen (520) angeordnet sind und die an dem Grundkörper (501) lösbar befestigt ist.

3. Rollfuß (500) nach Anspruch 2, **dadurch gekennzeichnet**, é dass die Kippschutzleiste (510, 516, 517) an dem Grundkörper (501) in zwei verschiedenen Positionen befestigbar ist.

4. Rollfuß (500) nach einem der Ansprüche 2 bis 3, **dadurch gekennzeichnet, dass** in der Fußplatte (506) des Grundkörpers (501) eine den Öffnungen (204, 304) der Schiene (200, 300) oder Schweißtische entsprechende Öffnung (514) vorgesehen ist, wodurch der Rollfuß (500) auf der Schiene (200, 300) mittels eines Spannbolzens (522) rasterweise fixierbar ist.

5. Rollfuß (500) nach einem der Ansprüche 2 bis 3, **dadurch gekennzeichnet, dass** an zwei gegenüberliegenden Seiten der Fußplatte (506) Abstreifbürsten (512) vorgesehen sind.

6. Schienensystem für Schweißtische umfassend wenigstens eine Schiene (300) nach Anspruch 1 sowie wenigstens einen Rollfuß (500) nach einem der Ansprüche 2 bis 5.

7. Schienensystem nach Anspruch 6, **dadurch gekennzeichnet, dass** das Schienensystem zwei parallel verlaufende Schienen (300) nach Anspruch 1 und wenigstens einen Verbindungsrahmen (418) mit einer Tischplatte (421) umfasst, wobei der Verbindungsrahmen (418) mit Rollen versehen ist, die für das Zusammenwirken mit einer Rundschiene (206, 306) ausgebildet sind, indem in Fußplatten des Verbindungsrahmens (418) jeweils eine Ausnehmung vorgesehen ist, in der eine Drehkranzrolle in verschiedenen Drehpositionen befestigbar ist.

## Claims

1. Rail (300) for a rail system for welding tables including a base rail (301), which is configured for fastening on or in a floor (600) and has multiple openings (304) which correspond to the openings of the welding tables, whereby a round rail (306) is fastened in a recess (305) of the base rail (301), **characterized in that** the rail (300) has a tilt protection recess (309), which includes a tilt protection edge (313) and is configured for interaction with a tilt protection device (503) of a caster (500), whereby the tilt protection recess (309) is arranged in the topside (308) of the rail (300) and the tilt protection edge (313) is formed by a tilt protection strip (311), which is detachably fastened to the rail (300) and partially covers the tilt protection recess (309) .

2. Caster (500) for a rail system for welding tables, which has a base body (501), rollers (502) and a tilt protection device (503), whereby the rollers (502) are configured for interaction with a round rail (206, 306) and the tilt protection device (503) is configured for interaction with a tilt protection recess (209, 309) and tilt protection edge (210, 313) of a rail (200, 300), **characterized in that** the tilt protection device (503) includes a tilt protection strip (510, 516, 517) on which a tilt protection hook (517) or tilt protection rollers (520) are arranged and which is detachably fastened on the base body (501).

3. Caster according to claim 2, **characterized in that** the tilt protection strip (510, 516, 517) is fastenable on the base body (501) in two different positions.

4. Caster (500) according to one of the claims 2 to 3, **characterized in that** in the foot plate (506) of the base body (501) an opening (514) corresponding to the openings (204, 304) of the rail (200, 300) or to the welding tables is provided, whereby the caster (500) is fixable on the rail (200, 300) at discrete positions by means of a fastening bolt (522).

5. Caster (500) according to one of the claims 2 to 3, **characterized in that** on two opposing sides of the foot plate (506) wipe-off brushes (512) are provided.

6. Rail system for welding tables including at least one rail (300) according to claim 1 and at least one caster (500) according to one of the claims 2 to 5.

7. Rail system according to claim 6, **characterized in that** the rail system includes two parallel extending rails (300) according to claim 1 and at least one connecting frame (418) with a table top (421) whereby the connecting frame (418) is provided with rollers, which are configured for interaction with a round rail (206, 306), by providing a respective recess in footplates of the connecting frame (418), in which recess a rotating assembly roller is fastenable in different rotational positions.

## Revendications

1. Rail (300) pour un système de rails pour tables de soudage, comportant un rail de base (301), qui est configuré pour la fixation sur ou dans un sol (600) et qui présente plusieurs ouvertures (304) correspondant aux ouvertures des tables de soudage, dans lequel un rail rond (306) est fixé dans un renfoncement (305) du rail de base (301), **caractérisé par le fait que** le rail (300) présente un renfoncement (309) de protection contre le basculement, qui comporte un bord (313) de protection contre le basculement et qui est configuré pour la coopération avec un dispositif (503) de protection contre le basculement d'une roulette (500), dans lequel le renfoncement (309) de protection contre le basculement est disposé dans le côté supérieur (308) du rail (300) et le bord (313) de protection contre le basculement est formé par une bande (311) de protection contre le basculement fixée de manière détachable au rail (300) et recouvrant partiellement le renfoncement (309) de protection contre le basculement.

2. Roulette (500) pour un système de rails pour tables de soudage, qui comporte un corps de base (301), des rouleaux (302) et un dispositif (503) de protection contre le basculement, dans laquelle les rouleaux (502) sont configurés pour la coopération avec un rail rond (206, 306) et le dispositif (503) de protection contre le basculement est configuré pour la coopération avec un renfoncement (209, 309) de protection contre le basculement et un bord (210, 311) de protection contre le basculement d'un rail (200, 300), **caractérisé par le fait que** le dispositif (503) de protection contre le basculement comporte une bande (510, 516, 517) de protection contre le basculement, sur laquelle un crochet (517) de protection contre le basculement ou des rouleaux (520) de protection contre le basculement sont disposés et qui est fixée de manière détachable sur le corps de base (501).

3. Roulette (500) selon la revendication 2, **caractérisée par le fait que** la bande (510, 516, 517) de protection contre le basculement est apte à être fixée sur le corps de base (501) dans deux positions différentes.

4. Roulette (500) selon l'une des revendications 2 et 3, **caractérisée par le fait que**, dans l'embase (506) du corps de base (501), une ouverture (514) correspondant aux ouvertures (204, 304) du rail (200, 300) ou des tables de soudage est prévue, ce par quoi la roulette (500) est apte à être fixée sur le rail (200, 300) à des positions discrètes au moyen d'un boulon de serrage (522).

5. Roulette (500) selon l'une des revendications 2 et 3, **caractérisée par le fait que** des brosses de raclage (512) sont prévues sur deux côtés opposés de l'embase (506) .

6. Système de rails pour tables de soudage, comportant au moins un rail (300) selon la revendication 1 ainsi qu'au moins une roulette (500) selon l'une des revendications 2 à 5.

7. Système de rails selon la revendication 6, **caractérisé par le fait que** le système de rails comporte deux rails (300) selon la revendication 1 s'étendant parallèlement et au moins un cadre de liaison (418) avec une plaque de table (421), dans lequel le cadre de liaison (418) est équipé de rouleaux qui sont configurés pour la coopération avec un rail rond (206, 306), où dans des embases du cadre de liaison (418) est prévu à chaque fois un renfoncement dans lequel un rouleau de couronne rotative est apte à être fixé dans des positions en rotation différentes.
